# EUROPÄISCHE PATENTSCHRIFT

(11) **EP 3 183 845 B1**
(45) Veröffentlichungstag und Bekanntmachung des Hinweises auf die Patenterteilung: **27.06.2018**
(21) Anmeldenummer: 15744145.2
(22) Anmeldetag: 16.07.2015
(51) Int. Cl.: H04L 12/40, H04L 12/12

(54) **SWITCH-EINHEIT, ETHERNET-NETZWERK UND VERFAHREN ZUR AKTIVIERUNG VON KOMPONENTEN IN EINEM ETHERNET-NETZWERK**
SWITCH UNIT, ETHERNET NETWORK, AND METHOD FOR ACTIVATING COMPONENTS IN AN ETHERNET NETWORK
UNITÉ DE COMMUTATION, RÉSEAU ETHERNET ET PROCÉDÉ D'ACTIVATION DE COMPOSANTS DANS UN RÉSEAU ETHERNET

(30) Priorität: 19.08.2014 DE 102014216444
(43) Veröffentlichungstag der Anmeldung: 28.06.2017
(73) Patentinhaber: Volkswagen Aktiengesellschaft, 38440 Wolfsburg (DE)
(72) Erfinder: KRIEGER, Olaf, 39291 Lostau (DE); CLAUS, Lothar, 38154 Königslutter (DE); HOFFMANN, Christoph, 38446 Wolfsburg (DE)
(86) Internationale Anmeldenummer: PCT/EP2015/066287
(87) Internationale Veröffentlichungsnummer: WO 2016/026623

(56) Entgegenhaltungen:
- EP-A2- 1 895 710
- WO-A2-2004/036401
- US-A- 6 134 665
- US-A1- 2013 318 380

## Beschreibung

Die Erfindung betrifft eine Switch-Einheit, ein Ethernet-Netzwerk mit einer solchen Switch-Einheit sowie ein Verfahren zur Aktivierung von Komponenten in einem solchen Ethernet-Netzwerk.

Ethernet-Netzwerke sind aus der Datentechnik seit langem bekannt, wobei in jüngster Zeit über deren Einsatz in Kraftfahrzeugen nachgedacht wird. Ein Vorteil von Ethernet-Netzwerken gegenüber herkömmlichen Fahrzeugnetzwerken wie z.B. CAN oder FlexRay ist, dass diese sehr einfach einen Teilnetzbetrieb erlauben, sodass nicht benötigte Steuergeräte ausgeschaltet bzw. schlafen gelegt werden können. Dies erlaubt eine entsprechende Einsparung von elektrischer Energie.

Aus der DE 10 2010 008 818 A1 ist ein Verfahren zur Aktivierung mindestens einer temporär inaktiven Netzwerk-Komponente eines Netzwerk-Systems für ein Kraftfahrzeug bekannt, wobei eine zentrale Netzwerkeinrichtung des Netzwerk-Systems über einen Pfad innerhalb des Netzwerk-Systems mit der Netzwerk-Komponente signaltechnisch verbunden ist. Der Pfad führt zumindest teilweise über ein Netzwerk-Segment des Netzwerk-Systems, wobei das Netzwerk-Segment die Netzwerk-Komponente und eine ihr zugeordnete erste Aktivierungseinrichtung unverzweigt mit einer im Pfad angeordneten Switch-Einrichtung und einer ihr zugeordneten zweiten Aktivierungseinrichtung signaltechnisch verbindet. Die zentrale Netzwerkeinrichtung spricht die erste Aktivierungseinrichtung mittels der Switch-Einrichtung durch Senden eines Netzwerkfunktions-Kontrollsignals an. Das Netzwerk-System ist dabei vorzugsweise ein Ethernet-Netzwerk. Nachteilig an derartigen zentralen Lösungen ist, dass dabei der Ausfall dieser zentralen Komponente zum Totalausfall des Netzwerkes führt.

Aus der DE 10 2012 207 858 A1 ist ein Verfahren zur Aktivierung von deaktivierten Steuergeräten eines Fahrzeuges in einem Fahrzeugnetz bekannt, in dem die Knoten des Fahrzeugnetzes bildenden Steuergeräte des Fahrzeugs miteinander kommunizieren können, wobei eine zu aktivierende Gruppe von untereinander in Kommunikationsbeziehung stehenden Steuergeräten des Fahrzeugs in einem zu aktivierenden Teilnetz zusammengefasst ist. Dabei weist jeder Knoten mindestens eine Netzwerkschnittstelle zu einem über diese Netzwerkschnittstelle direkt ansprechbaren benachbarten Knoten und eine Teilnetzverwaltung auf. Die Teilnetzverwaltung gibt an, über welche Netzwerkschnittstelle der Knoten des Fahrzeugnetzes mit welchem Teilnetz kommunizieren kann, wobei ein Knoten bei Vorliegen eines Aktivierungsbefalls für die Steuergeräte eines Teilnetzes in der Teilnetzverwaltung identifiziert, über welche seiner Netzwerkschnittstellen er mit dem zu aktivierenden Teilnetz kommunizieren kann, wobei der Knoten anschließend über die identifizierten Netzwerkschnittstellen den Aktivierungsbefehl an die benachbarten Knoten überträgt. Der benachbarte Knoten wird dann durch das Aussenden des Aktivierungsbefehls aktiviert, sofern der Knoten vor Aussenden des Aktivierungsbefehls deaktiviert war. Diese Art des Kommunikationsaufbaus kann auch als Step-by-Step-Wecken bezeichnet werden. Dieses Verfahren hat allerdings den Nachteil, dass es je nach Anzahl der zu weckenden Steuergeräte bzw. Switch-Einrichtungen langsam ist. So sollen üblicherweise interaktive elektrische Systeme ohne merkbare Verzögerung im Fahrzeug reagieren. Ein Verbindungsaufbau zwischen zwei unmittelbar verbundenen Steuergeräten kann aber bereits bis zu 200 ms dauern.

WO 2004/036401 A2 beschreibt ein Verfahren zur automatischen Verbindung von Geräten zu einem Bussystem, z.B. Ethernet, und zur Einstellung der Übertragungsrate über das Bussystem in Abhängigkeit der Verbindungseigenschaften. Wenn ein neuer Busknoten am Bussystem angeschlossen wird, verwendet dieser Busknoten vorkonfigurierte Parameter aus einer im Speicher abgelegten Liste, um die Übertragung über das Bussystem zu starten. Nachdem die Übertragung funktioniert, kann sie von einem Busmaster geändert werden, um an die aktuellen Buseigenschaften angepasst zu werden.

Eine mögliche Lösung oben genanntes Zeitproblems ist ein globales Wecken. Hierzu können die Switch-Einheiten (bzw. Switch-Einrichtungen) eine Hardware aufweisen, die dafür sorgt, dass sobald Aktivität auf einem Link erkannt wird (bevor die Kommunikation etabliert ist), alle anderen Links unmittelbar auch geweckt werden. Das führt dazu, dass alle Links im Fahrzeug nahezu gleichzeitig hochfahren, sobald ein Steuergerät Kommunikationsbedarf hat (d.h. nach ca. 200 ms). Sobald alle Steuergeräte wach sind und feststellen, dass sie eigentlich nicht benötigt werden, können sie abgestimmt über die bis dahin etablierte Kommunikation heruntergefahren werden und sich ausschalten. Das Herunterfahren kann dann beispielsweise über ein Netzwerk-Management-Protokoll erfolgen. Dies ist unter energetischen Gesichtspunkten nicht optimal.

Der Erfindung liegt das technische Problem zugrunde, eine Switch-Einheit sowie ein Ethernet-Netzwerk zu schaffen sowie ein Verfahren zur Aktivierung von Komponenten in einem Ethernet-Netzwerk zur Verfügung zu stellen, mittels derer ein energiesparendes und schnelles Wecken von schlafenden Steuergeräten und/oder Switch-Einheiten ermöglicht wird.

Die Lösung des technischen Problems ergibt sich durch die Switch-Einheit mit den Merkmalen des Anspruchs 1, ein Ethernet-Netzwerk mit den Merkmalen des Anspruchs 5 sowie ein Verfahren zur Aktivierung von Komponenten in einem Ethernet-Netzwerk mit den Merkmalen des Anspruchs 9. Weitere vorteilhafte Ausgestaltungen der Erfindung ergeben sich aus den Unteransprüchen.

Die Switch-Einheit für ein Ethernet-Netzwerk umfasst einen Switch und einen Mikroprozessor, wobei der Switch mindestens drei Ports aufweist, die mit den Ein- und Ausgängen der Switch-Einheit verbunden sind. Zwischen den Ports und den Ein- und Ausgängen der Switch-Einheit ist jeweils ein Signaldetektor und -generator zur Erfassung sowie zur Initiierung einer Busaktivität angeordnet. Weiter weist die Switch-Einheit eine Speichereinheit auf, wobei in der Speichereinheit zu jedem Ein- und Ausgang eine Zuordnungsvorschrift zu den anderen Ein- und Ausgängen der Switch-Einheit abgelegt ist, wobei die Switch-Einheit derart ausgebildet ist, dass bei Erfassung einer Busaktivität an einem Signaldetektor und -generator die zugeordneten Ein- und Ausgänge dieses Ein- und Ausgangs aus der Speichereinheit ausgelesen werden und die zugehörigen Signaldetektoren und -generatoren aufgeweckt werden, sodass diese selbst eine Busaktivität an ihren Ein- und Ausgängen generieren. Der Vorteil ist, dass das Aufwecken der Signaldetektoren und -generatoren erheblich schneller ist, als der Aufbau der eigentlichen Kommunikationsverbindung zwischen zwei Steuergeräten, zwei Switch-Einheiten oder einem Steuergerät und einer Switch-Einheit. Daher weckt die Switch-Einheit bereits die nächste benötigte Komponente (Steuergerät oder Switch-Einheit) auf, bevor überhaupt eine Kommunikationsverbindung aufgebaut ist. Dies bewirkt einen erheblichen zeitlichen Gewinn gegenüber dem Step-by-Step-Wecken.

In einer Ausführungsform ist die Switch-Einheit derart ausgebildet, dass die Speichereinheit durch den Mikroprozessor konfiguriert werden kann. Dadurch kann die Switch-Einheit vor dem Deaktivieren jeweils neu festlegen, welche Komponenten aufgrund einer Aktivität einer Komponente aufgeweckt werden sollen. Dies ermöglicht eine große Flexibilität beim Aufbau der Datenverbindungen.

In einer weiteren Ausführungsform sind die Signaldetektoren und -generatoren und die Speichereinheit permanent spannungsversorgt, sodass der Aufweckvorgang sehr schnell erfolgt.

Dem Switch und dem Mikroprozessor ist hingegen ein Spannungsregler zugeordnet, der derart ausgebildet ist, dass dieser mindestens in Abhängigkeit der Signale an den Signaldetektoren und -generatoren geschaltet wird. Der Spannungsregler kann dabei derart ausgebildet sein, dass dieser von einer Stand-By-Spannung auf Betriebsspannung hochregelt. Der Spannungsregler kann aber auch ein Schalter sein, der die Betriebsspannung zu- und abschaltet.

Das Ethernet-Netzwerk weist mindestens eine Switch-Einheit der zuvor beschriebenen Art auf, die mit Steuergeräten und/oder weiteren Switch-Einheiten verbunden ist.

Dabei kann vorgesehen sein, dass alle Switch-Einheiten mit einer Speichereinheit ausgebildet sind, in der jeweils die Zuordnungsvorschrift abgelegt ist. Es ist aber auch je nach Netzwerkkonfiguration möglich, dass einzelne Switch-Einheiten eine solche Speichereinheit nicht aufweisen und beispielsweise auf ein Kommunikationssignal warten oder aber alle angeschlossenen Steuergeräte und/oder Switch-Einheiten aufwecken. Dabei kann auch vorgesehen sein, dass eine Switch-Einheit trotz Speichereinheit in einem bestimmten Betriebsmodus alle verbundenen Steuergeräte und/oder Switch-Einheiten aufweckt, beispielsweise weil die aufzubauende Datenverbindung zeitkritisch ist.

In einer weiteren Ausführungsform sind die Switch-Einheiten derart ausgebildet, dass in einem weiteren Betriebsmodus ein Step-by-Step-Wecken durchgeführt wird. Dies kann beispielsweise sinnvoll sein, wenn eine völlig neue Datenverbindung aufgebaut werden soll oder eine der Speichereinheiten falsch konfiguriert ist. Dabei kann es jedoch zu einer merklichen Verzögerung im Netzwerk kommen.

Das Verfahren zur Aktivierung von Komponenten in einem Ethernet-Netzwerk umfasst den Verfahrensschritt, dass aufgrund einer Busaktivität eines die Datenverbindung aufbauenden Steuergerätes in der mindestens einen Switch-Einheit mit Speichereinheit diese Busaktivität mittels des Signaldetektors und -generators in der Switch-Einheit erfasst wird und eine Busaktivität an den zugeordneten Ein- und Ausgängen erzeugt wird, sodass die daran angeschlossenen Steuergeräte und/oder Switch-Einheiten aufgeweckt werden, wobei vorzugsweise parallel dazu der Mikroprozessor hochgefahren wird.

Das Ethernet-Netzwerk ist vorzugsweise ein Fahrzeugnetzwerk, kann aber auch in beliebig anderen Umgebungen eingesetzt werden.

Die Erfindung wird nachfolgend anhand eines bevorzugten Ausführungsbeispiels näher erläutert. Die Figuren zeigen:
- Fig. 1: ein schematisches Blockschaltbild eines Teils eines Ethernet-Netzwerks mit einem Step-by-Step-Wecken (Stand der Technik) und
- Fig. 2: ein schematisches Blockschaltbild eines Teils eines Ethernet-Netzwerks mit einer erfindungsgemäßen Switch-Einheit.

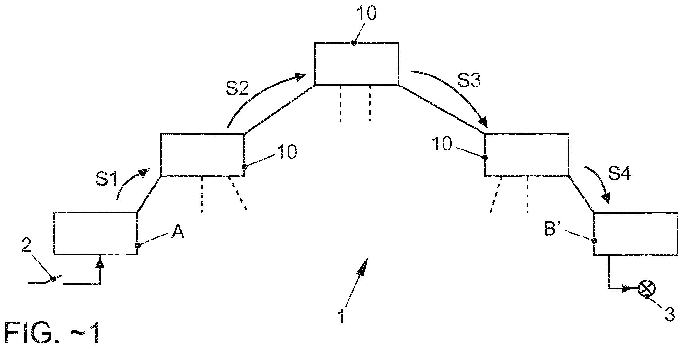

In Fig. 1 ist ein Teil eines Ethernet-Netzwerks 1 dargestellt, das ein erstes Steuergerät A und ein zweites Steuergerät B' aufweist, die über drei Switch-Einheiten 10 miteinander verbunden sind, wobei die gestrichelte Linie an den Switch-Einheiten 10 andeuten sollen, dass diese mit weiteren Steuergeräten und/oder Switch-Einheiten verbunden sein können. Dem Steuergerät A ist ein Schalter oder Sensor 2 zugeordnet, wobei bei Erfassung eines Sensorsignals oder der Betätigung des Schalters ein Aktor 3 durch das Steuergerät B' aktiviert sein soll.

Sei nun angenommen, dass alle Steuergeräte A, B' und alle Switch-Einheiten 10 schlafen, so wird durch den Sensor 2 oder Schalter zunächst das Steuergerät A geweckt. Nachdem das Steuergerät A aufgeweckt ist, überträgt dieses in einem ersten Schritt S1 ein Kommunikationssignal an die verbundene Switch-Einheit 10 mit dem Wunsch, mit Steuergerät B eine Datenverbindung aufzubauen. Die Switch-Einheit 10 erkennt nun an der Adresse von Steuergerät B', dass die darüberliegende Switch-Einheit 10 für die Datenverbindung benötigt wird und übermittelt an diese in einem zweiten Schritt S2 ein weiteres Kommunikationssignal an diese Switch-Einheit 10, die dann in einem dritten Schritt S3 ein Kommunikationssignal an die weitere Switch-Einheit 10 übermittelt, bis schließlich in einem weiteren Schritt S4 die Switch-Einheit durch ein Kommunikationssignal das Steuergerät B' aufweckt. Das Steuergerät B' kann dann den Aktor 3 aktivieren. Sei angenommen, dass jeder Schritt S1-S4 ca. 200 ms dauert, so benötigt die Datenverbindung von A nach B' ca. 800 ms. Dieses Wecken wird auch als Step-by-Step-Wecken bezeichnet.

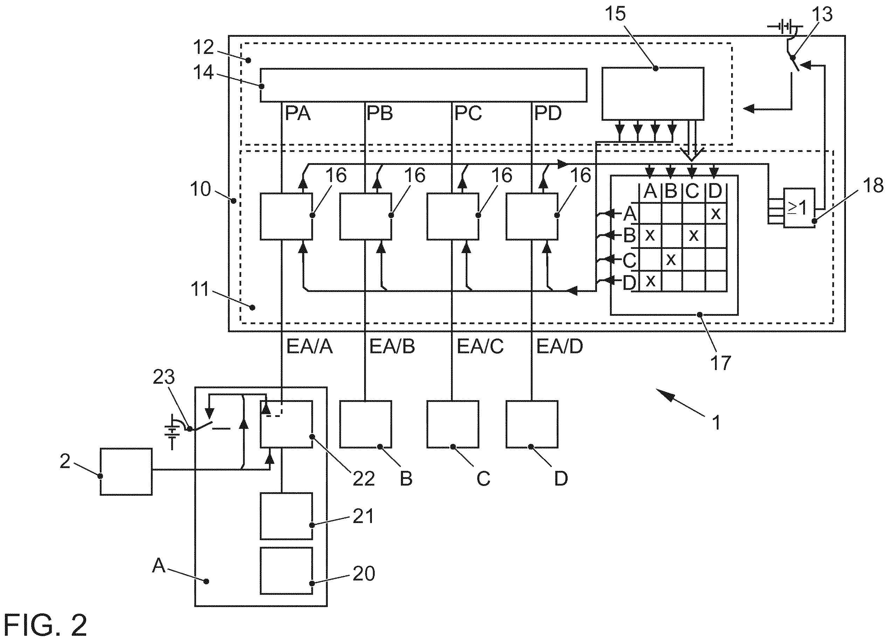

In der Fig. 2 ist wieder ein Teil eines Ethernet-Netzwerks 1 mit dem Steuergerät A und einer Switch-Einheit 10 dargestellt, wobei die dargestellte Switch-Einheit 10 mit weiteren Komponenten B, C und D verbunden ist, wobei B, C und D Steuergeräte oder Switch-Einheiten 10 sein können.

Die Switch-Einheit 10 weist einen Teil 11 auf, der permanent spannungsversorgt ist, und einen Teil 12 auf, dessen Spannung über einen Schalter 13 ein- und ausgeschaltet werden kann. Der zweite Teil 12 umfasst einen Switch 14 mit vier Ports PA-PD sowie einen Mikroprozessor 15. Der erste Teil 11 weist vier Signaldetektoren und -generatoren 16 zur Erfassung und Initiierung einer Busaktivität auf. Der Signaldetektor und -generator 16 besteht beispielsweise aus einem Transceiver, der auf eine Zustandsänderung auf der angeschlossenen Busleitung reagieren und selbst gültige Signale erzeugen kann. Weiter weist der erste Teil 11 eine Speichereinheit 17, die z.B. als nicht flüchtiges RAM ausgebildet ist, sowie eine Oder-Logik 18 auf. Die Einheiten 16 liegen zwischen den Ports PA-PD und den Ein- und Ausgängen EA/A-EA/D der Switch-Einheit 10. Dabei soll durch die Bezeichnung Ein- und Ausgang klargestellt werden, dass die Verbindung bidirektional ist, also über den Ein- und Ausgang gesendet und empfangen werden kann. In der Speichereinheit 17 ist eine Zuordnungsvorschrift abgelegt, aus der sich ergibt, mit welchen Netzwerkteilnehmern ein einzelner Netzwerkteilnehmer eine Datenverbindung aufbauen möchte bzw. über welche die Datenverbindung gehen muss. So ist beispielhaft dargestellt, dass das Steuergerät A für eine Datenverbindung die Komponenten B und D benötigt. Entsprechend benötigt die Komponente B beispielsweise die Komponente C usw.

Das Steuergerät A umfasst einen Mikroprozessor 20, einen Ethernet-Physical-Layer-Schaltkreis 21 sowie einen Signaldetektor und -generator 22, der analog den Signaldetektoren und - generatoren 16 in der Switch-Einheit 10 aufgebaut ist. Weiter weist das Steuergerät A einen schaltbaren Spannungsregler 23 auf. Der Ethernet-Physical-Layer-Schaltkreis 21 dient dabei zur Kodierung und Dekodierung der digitalen Signale des Mikroprozessors 20 in die Ethernet-Bussignale.

Dabei sei nun angenommen, dass das Steuergerät A, die Switch-Einheit 10 und die Komponenten B-D deaktiviert sind. Erfasst dann der Sensor 2 ein Signal, so generiert dieser ein Signal, um den Spannungsregler 23 einzuschalten. Gleichzeitig wird der Signaldetektor und - generator 22 angesteuert, der seinen Zustand ändert und ein detektierbares Signal überträgt. Parallel zur Ansteuerung des Signaldetektor und -generator 22 wird der Mikroprozessor 20 hochgefahren. Noch bevor der Mikroprozessor 20 hochgefahren ist, erfasst der dem Ein- und Ausgang EA/A zugeordnete Signaldetektor und -generator 16 die Zustandsänderung des Signaldetektor und -generator 22 und liest die zugehörige Spalte für A aus der Speichereinheit 17 aus. Über den Auslesevorgang werden entsprechend die Signaldetektoren und -generatoren 16 den Ein- und Ausgängen EA/B und EA/D angesprochen, die daraufhin ihren Zustand ändern, was von den Komponenten B und D über ihre Signaldetektoren und -generatoren erfasst wird. Parallel zum Auslesen der Speichereinheit 17 wird über die Oder-Logik 18 der Schalter 13 aktiviert und der Mikroprozessor 15 und der Switch 14 hochgefahren. Wenn nun das Steuergerät A seine Kommunikation beginnt, sind die Switch-Einheit 10 und die Komponenten B und D bereits aktiviert, sodass die Datenverbindung zwischen Steuergerät A und der Zielkomponente (B und D oder eine mit B oder D verbundene weitere Komponente) schneller aufgebaut werden kann.

Dabei kann die Zuordnungsvorschrift in der Speichereinheit 17 statisch sein oder aber durch den Mikroprozessor 15 konfigurierbar sein, was durch den Pfeil angedeutet ist. Dabei kann das System auch selbstlernend ausgestaltet werden, sodass beispielsweise Steuergeräte, die geweckt werden, aber tatsächlich nicht benötigt werden, dies zurückmelden und entsprechend aus der Matrix entfernt werden.

Ist fehlerhafterweise eine aufzuweckende Komponente nicht in der Matrix, so wird die Datenverbindung über ein Step-by-Step-Wecken aufgebaut, wobei dann die fehlende Komponente in die Matrix eingetragen werden kann.

Soll das Steuergerät A aufgeweckt werden, so wird entsprechend der zugehörige Signaldetektor und -generator 16 in der Switch-Einheit 10 angesteuert. Diese Zustandsänderung wird dann von dem Signaldetektor und -generator 22 erfasst, was in Fig. 2 gestrichelt angedeutet ist. Der Signaldetektor und -generator 22 schaltet dann den Spannungsregler 23 an.

## Patentansprüche

1. Switch-Einheit (10) für ein Ethernet-Netzwerk (1), umfassend einen Switch (14) und einen Mikroprozessor (15), wobei der Switch (14) mindestens drei Ports (PA-PD) aufweist, die mit Ein- und Ausgängen (EA/A-EA/D) der Switch-Einheit (10) verbunden sind,
**dadurch gekennzeichnet, dass**
zwischen den Ports (PA-PD) und den Ein- und Ausgängen (EA/A-EA/D) der Switch-Einheit (10) jeweils ein Signaldetektor und -generator (16) zur Erfassung und Initiierung einer Busaktivität angeordnet ist, wobei die Switch-Einheit (10) weiter eine Speichereinheit (17) aufweist, wobei in der Speichereinheit (17) zu jedem Ein- und Ausgang (EA/A-EA/D) eine Zuordnungsvorschrift zu den anderen Ein- und Ausgängen (EA/A-EA/D) der Switch-Einheit (10) abgelegt ist, wobei die Switch-Einheit (10) derart ausgebildet ist, dass bei Erfassung einer Busaktivität an einem Signaldetektor und - generator (16) die zugeordneten Ein- und Ausgänge (EA/A-EA/D) dieses Ein- und Ausganges (EA/A-EA/D) aus der Speichereinheit (17) ausgelesen werden und die zugehörigen Signaldetektoren und -generatoren (16) aufgeweckt werden, sodass diese selbst eine Busaktivität an ihren Ein- und Ausgängen (EA/A-EA/D) generieren.

2. Switch-Einheit nach Anspruch 1, **dadurch gekennzeichnet, dass** die Switch-Einheit (10) derart ausgebildet ist, dass die Speichereinheit (17) durch den Mikroprozessor (15) konfiguriert wird.

3. Switch-Einheit nach Anspruch 1 oder 2, **dadurch gekennzeichnet, dass** die Signaldetektoren und -generatoren (16) und die Speichereinheit (17) permanent spannungsversorgt sind.

4. Switch-Einheit nach einem der vorangegangenen Ansprüche, **dadurch gekennzeichnet, dass** dem Switch (14) und dem Mikroprozessor (15) ein Schalter (13) zugeordnet ist, der derart ausgebildet ist, dass dieser mindestens in Abhängigkeit der Signale an den Signaldetektoren und -generatoren (16) geschaltet wird.

5. Ethernet-Netzwerk (1), das mindestens eine Switch-Einheit (16) aufweist, die mit Steuergeräten (A) und/oder weiteren Switch-Einheiten verbunden ist,
**dadurch gekennzeichnet, dass**
die mindestens eine Switch-Einheit (10) einen Switch (14) mit einem Mikroprozessor (15) aufweist, wobei der Switch (14) mindestens drei Ports (PA-PD) aufweist, die mit Ein- und Ausgängen (EA/A-EA/D) der Switch-Einheit (10) verbunden sind, wobei zwischen den Ports (PA-PD) und den Ein- und Ausgängen (EA/A-EA/D) der Switch-Einheit (10) jeweils ein Signaldetektor und -generator (16) zur Erfassung einer Busaktivität angeordnet ist, wobei die mindestens eine Switch-Einheit (10) weiter eine Speichereinheit (17) aufweist, wobei in der Speichereinheit (17) zu jedem Ein- und Ausgang (EA/A-EA/D) eine Zuordnungsvorschrift zu den anderen Ein- und Ausgängen (EA/A-EA/D) der Switch-Einheit (10) abgelegt ist, wobei die mindestens eine Switch-Einheit (10) derart ausgebildet ist, dass bei Erfassung einer Busaktivität an einem Signaldetektor und -generator (16) die zugeordneten Ein- und Ausgänge (EA/A-EA/D) dieses Ein- und Ausganges (EA/A-EA/D) aus der Speichereinheit (17) ausgelesen werden und die zugehörigen Signaldetektoren und -generatoren (16) aufgeweckt werden, sodass diese selbst eine Busaktivität an ihren Ein- und Ausgängen (EA/A-EA/D) generieren.

6. Ethernet-Netzwerk nach Anspruch 5, **dadurch gekennzeichnet, dass** mindestens eine Switch-Einheit (10) derart ausgebildet ist, dass in einem Betriebsmodus alle mit der Switch-Einheit (10) verbundenen Steuergeräte und/oder Switch-Einheiten aufgeweckt werden.

7. Ethernet-Netzwerk nach Anspruch 5 oder 6, **dadurch gekennzeichnet, dass** die Switch-Einheiten (10) derart ausgebildet sind, dass in einem weiteren Betriebsmodus ein Step-by-Step-Wecken durchgeführt wird.

8. Verfahren zur Aktivierung einer Komponente in einem Ethernet-Netzwerk (1) nach Anspruch 5,
**dadurch gekennzeichnet, dass**
aufgrund einer Busaktivität eines die Datenverbindung aufbauenden Steuergerätes (A) in der mindestens einen Switch-Einheit (10) diese Busaktivität mittels des Signaldetektors und -generators (16) in der Switch-Einheit (10) erfasst wird und eine Busaktivität an den zugeordneten Ein- und Ausgängen (EA/A-EA/D) erzeugt wird, sodass die daran angeschlossenen Steuergeräte und/oder Switch-Einheiten aufgeweckt werden.

9. Verfahren nach Anspruch 8, **dadurch gekennzeichnet, dass** parallel zum Aufweckvorgang der Mikroprozessor (15) hochgefahren wird.

## Claims

1. Switch unit (10) for an Ethernet network (1), comprising a switch (14) and a microprocessor (15), wherein the switch (14) has at least three ports (PA-PD) which are connected to inputs and outputs (EA/A-EA/D) of the switch unit (10), **characterized in that**
a signal detector and generator (16) for capturing and initiating bus activity is respectively arranged between the ports (PA-PD) and the inputs and outputs (EA/A-EA/D) of the switch unit (10), wherein the switch unit (10) also has a storage unit (17), wherein the storage unit (17) stores, for each input and output (EA/A-EA/D), an assignment rule with respect to the other inputs and outputs (EA/A-EA/D) of the switch unit (10), wherein the switch unit (10) is designed such that, if bus activity is captured at a signal detector and generator (16), the assigned inputs and outputs (EA/A-EA/D) of this input and output (EA/A-EA/D) are read from the storage unit (17) and the associated signal detectors and generators (16) are woken up, with the result that they themselves generate bus activity at their inputs and outputs (EA/A-EA/D).

2. Switch unit according to Claim 1, **characterized in that** the switch unit (10) is designed in such a manner that the storage unit (17) is configured by the microprocessor (15).

3. Switch unit according to Claim 1 or 2, **characterized in that** the signal detectors and generators (16) and the storage unit (17) are permanently supplied with voltage.

4. Switch unit according to one of the preceding claims, **characterized in that** a switching means (13) is assigned to the switch (14) and to the microprocessor (15) and is designed in such a manner that it is switched at least on the basis of the signals at the signal detectors and generators (16).

5. Ethernet network (1) having at least one switch unit (16) which is connected to control devices (A) and/or to further switch units,
**characterized in that**
the at least one switch unit (10) has a switch (14) having a microprocessor (15), wherein the switch (14) has at least three ports (PA-PD) which are connected to inputs and outputs (EA/A-EA/D) of the switch unit (10), wherein a signal detector and generator (16) for capturing bus activity is respectively arranged between the ports (PA-PD) and the inputs and outputs (EA/A-EA/D) of the switch unit (10), wherein the at least one switch unit (10) also has a storage unit (17), wherein the storage unit (17) stores, for each input and output (EA/A-EA/D), an assignment rule with respect to the other inputs and outputs (EA/A-EA/D) of the switch unit (10), wherein the at least one switch unit (10) is designed in such a manner that, if bus activity is captured at a signal detector and generator (16), the assigned inputs and outputs (EA/A-EA/D) of this input and output (EA/A-EA/D) are read from the storage unit (17) and the associated signal detectors and generators (16) are woken up, with the result that they themselves generate bus activity at their inputs and outputs (EA/A-EA/D).

6. Ethernet network according to Claim 5, **characterized in that** at least one switch unit (10) is designed in such a manner that all control devices and/or switch units connected to the switch unit (10) are woken up in an operating mode.

7. Ethernet network according to Claim 5 or 6, **characterized in that** the switch units (10) are designed in such a manner that step-by-step waking is carried out in a further operating mode.

8. Method for activating a component in an Ethernet network (1) according to Claim 5,
**characterized in that**
on account of bus activity of a control device (A) setting up the data connection in the at least one switch unit (10), this bus activity is captured by means of the signal detector and generator (16) in the switch unit (10) and bus activity is generated at the assigned inputs and outputs (EA/A-EA/D), with the result that the control devices and/or switch units connected thereto are woken up.

9. Method according to Claim 8, **characterized in that** the microprocessor (15) is started up in parallel with the waking-up operation.

## Revendications

1. Unité de commutation (10) pour un réseau Ethernet (1), comprenant un commutateur (14) et un microprocesseur (15), le commutateur (14) possédant au moins trois ports (PA-PD) qui sont reliés à des entrées et des sorties (EA/A-EA/D) de l'unité de commutation (10),
**caractérisée en ce que**
entre les ports (PA-PD) et les entrées et sorties (EA/A-EA/D) de l'unité de commutation (10) est respectivement disposé un détecteur et générateur de signal (16) destiné à détecter et à initier une activité de bus, l'unité de commutation (10) possédant en outre une unité de mémoire (17), une instruction d'association aux autres entrées et sorties (EA/A-EA/D) de l'unité de commutation (10) étant stockée dans l'unité de mémoire (17) pour chaque entrée et sortie (EA/A-EA/D), l'unité de commutation (10) étant configurée de telle sorte que lors de la détection d'une activité de bus au niveau d'un détecteur et générateur de signal (16), les entrées et sorties (EA/A-EA/D) associées de cette entrée et sortie (EA/A-EA/D) sont lues depuis l'unité de mémoire (17) et les détecteurs et générateurs de signal (16) correspondants sont réveillés, de sorte que ceux-ci génèrent eux-mêmes une activité de bus au niveau de leurs entrées et sorties (EA/A-EA/D).

2. Unité de commutation selon la revendication 1, **caractérisée en ce que** l'unité de commutation (10) est configurée de telle sorte que l'unité de mémoire (17) est configurée par le microprocesseur (15).

3. Unité de commutation selon la revendication 1 ou 2, **caractérisée en ce que** les détecteurs et générateurs de signal (16) et l'unité de mémoire (17) sont alimentés électriquement en permanence.

4. Unité de commutation selon l'une des revendications précédentes, **caractérisée en ce qu'**un interrupteur (13) est associé au commutateur (14) et au microprocesseur (15), lequel est configuré de telle sorte que celui-ci est commuté au moins en fonction des signaux au niveau des détecteurs et générateurs de signal (16).

5. Réseau Ethernet (1), lequel possède au moins une unité de commutation (16) qui est reliée à des contrôleurs (A) et/ou des unités de commutation supplémentaires,
**caractérisé en ce que**
l'au moins une unité de commutation (10), comprend un commutateur (14) et un microprocesseur (15), le commutateur (14) possédant au moins trois ports (PA-PD) qui sont reliés à des entrées et des sorties (EA/A-EA/D) de l'unité de commutation (10), un détecteur et générateur de signal (16) destiné à détecter une activité de bus étant respectivement disposé entre les ports (PA-PD) et les entrées et sorties (EA/A-EA/D) de l'unité de commutation (10), l'au moins une unité de commutation (10) possédant en outre une unité de mémoire (17), une instruction d'association aux autres entrées et sorties (EA/A-EA/D) de l'unité de commutation (10) étant stockée dans l'unité de mémoire (17) pour chaque entrée et sortie (EA/A-EA/D), l'au moins une unité de commutation (10) étant configurée de telle sorte que lors de la détection d'une activité de bus au niveau d'un détecteur et générateur de signal (16), les entrées et sorties (EA/A-EA/D) associées de cette entrée et sortie (EA/A-EA/D) sont lues depuis l'unité de mémoire (17) et les détecteurs et générateurs de signal (16) correspondants sont réveillés, de sorte que ceux-ci génèrent eux-mêmes une activité de bus au niveau de leurs entrées et sorties (EA/A-EA/D).

6. Réseau Ethernet selon la revendication 5, **caractérisé en ce qu'**au moins une unité de commutation (10) est configurée de telle sorte que dans un mode de fonctionnement, tous les contrôleurs et/ou unités de commutation reliés à l'unité de commutation (10) sont réactivés.

7. Réseau Ethernet selon la revendication 5 ou 6, **caractérisé en ce que** les unités de commutation (10) sont configurées de telle sorte que dans un mode de fonctionnement supplémentaire, un réveil pas à pas est effectué.

8. Procédé d'activation d'un composant d'un réseau Ethernet (1) selon la revendication 5,
**caractérisé en ce que**
du fait d'une activité de bus d'un contrôleur (A) qui établit la liaison de données dans l'au moins une unité de commutation (10), cette activité de bus est détectée au moyen du détecteur et générateur de signal (16) dans l'unité de commutation (10) et une activité de bus est générée au niveau des entrées et sorties (EA/A-EA/D) associées, de sorte que les contrôleurs et/ou unités de commutation qui y sont raccordés soient réveillés.

9. Procédé selon la revendication 8, **caractérisé en ce que** le microprocesseur (15) est démarré en parallèle avec le processus de réveil.
